# EUROPÄISCHE PATENTANMELDUNG

(11) **EP 2 754 348 A1**
(43) Veröffentlichungstag der Anmeldung: **16.07.2014**
(21) Anmeldenummer: 13401044.6
(22) Anmeldetag: 24.04.2013
(51) Int. Cl.: A01K 97/04

(54) **Behälter zum verzögerten Freisetzen eines Stoffes**

(30) Priorität: 12.01.2013 EP 13000151
(71) Anmelder: Syltron GmbH, 25980 Rantum (DE)
(72) Erfinder:
(74) Vertreter: Heyerhoff Geiger & Partner Patentanwälte

(57) **Zusammenfassung**

Die Erfindung betrifft einen Behälter (2, 16, 22, 34, 38, 42), insbesondere Lockstoffbehälter, zum verzögerten Freisetzen eines festen oder flüssigen Stoffes (10).

Um eine Freisetzung des Stoffs (10) einstellen zu können, wird vorgeschlagen, dass der Behälter (2, 16, 22, 34, 38, 42) ein Behältergehäuse (4, 40, 50) mit einem Gehäuseelement (6, 24, 26, 40, 46) aufweist, das mindestens eine einstellbare Öffnung (14) im Behältergehäuse (4, 40, 50) bildet.

## Beschreibung

Die Erfindung betrifft einen Behälter, insbesondere einen Lockstoffbehälter, zum verzögerten Freisetzen eines Stoffes.

Beim Fischfang werden Lockstoffe verwendet, die ins Wasser gegeben werden, um Fische anzulocken. Der Lockstoff wird hierbei in die Nähe des verwendeten Angelköders gebracht, um die Fische gezielt an den Angelköder beziehungsweise den Angelhaken zu führen. Zum Halten der Lockstoffe werden sogenannte Futterkörbe verwendet, auch Feeder genannt, die meist in Form eines Käfigs ausgeführt sind, in den die Lockstoffe eingegeben werden. Solche Futterkörbe weisen eine feste Lochgröße oder Maschenweite auf, durch die das Lockmittel entweicht. Hierdurch ist die Rate der Freisetzung des Lockmittels allerdings nicht dosierbar. Weiterhin ist die Lochgröße beziehungsweise Maschenweite von Futterkörben fertigungsbedingt sehr grob.

Es ist eine Aufgabe der vorliegenden Erfindung, einen Behälter anzugeben, mit dem ein Freisetzen des im Behälter befindlichen Stoffs einstellbar ist.

Diese Aufgabe wird durch einen Behälter der eingangs genannten Art gelöst, der erfindungsgemäß ein Behältergehäuse mit einem Gehäuseelement aufweist, das mindestens eine einstellbare Öffnung im Behältergehäuse bildet.

Zum Freisetzen von z.B. flüssigen Lockmitteln wird eine Öffnungsweite von nahezu Null benötigt, bei grobstofflichen Lockmitteln hingegen ist eine entsprechend weitere bzw. größere Öffnung sinnvoll. Diese Forderungen lassen sich erfindungsgemäß mit einer einstellbaren Öffnungsgröße erreichen.

Der Stoff kann ein fester oder flüssiger Stoff sein und dient vorzugsweise zum Zwecke des Fischfangs. Er kann ein Lockstoff sein, insbesondere ein Fischfang-Lockstoff. Der Behälter kann daher vorteilhafterweise zum Freisetzen fester oder flüssiger Stoffe zum Zwecke des Fischfangs dienen. Solche Stoffe sind üblicherweise eine Zusammensetzung anlockender Stoffe, zum Beispiel in Form einer Tablette oder in flüssiger Form. Insofern kann der Behälter ein Behälter zum verzögerten Freisetzen mehrerer Stoffe sein, die jeweils fest oder flüssig sein können. Insbesondere ist zumindest ein Stoff fest und ein anderer Flüssig. Da es mit Bezug auf die Erfindung nicht auf die Anzahl der Stoffe in der Zusammensetzung ankommt, wird im Folgenden in Bezug zum Behälter und dem Verfahren vereinfacht vom Stoff gesprochen, selbst wenn das Lockmittel aus mehreren Stoffen zusammengesetzt ist, ohne dass damit eine Einschränkung auf einen Stoff verbunden wäre.

Das verzögerte Freisetzen des Stoffes aus dem Behälter kann durch ein Halten des Stoffes am oder im Behältergehäuse erreicht werden. Das Behältergehäuse kann den Stoff nach außen zumindest teilweise abschirmen, sodass diese Abschirmung die Verzögerung bei der Freisetzung bewirkt. Ebenfalls denkbar ist die Anbindung des Stoffs am Behältergehäuse, beispielsweise am Gehäuseelement. Dies kann durch ein Festkleben, Verbacken, Pressen oder eine andere geeignete Form zum Befestigen des Stoffs am Behältergehäuse erfolgen. Bei einer solchen Ausführungsform kann der Stoff auch zumindest teilweise an einer Außenseite des Behältergehäuses angeordnet sein. Der Stoff ist zweckmäßigerweise ein Lockstoff, insbesondere zum Fischfang, und/oder Futter. Insofern ist der Behälter zweckmäßigerweise ein Futterbehälter, ein Lockstoffbehälter und/oder ein Fischfanglockstoffbehälter.

Je nach Art des Stoffes, also Zusammensetzung, Pressung, Größe und Form, löst sich dieser schneller oder langsamer in Wasser auf. Außerdem ist es in Abhängigkeit von der Art des Stoffes wünschenswert, die Freisetzung aus dem Behältergehäuse zu verzögern. Die Verzögerung ist einstellbar durch das Einstellen der Öffnungsgröße. Die Einstellung kann hierbei durch eine Betätigung des Gehäuseelements sein, zum Beispiel das Öffnen oder zumindest teilweise Schließen der Öffnung. In einer vorteilhaften Ausführungsform der Erfindung ist das Gehäuseelement, insbesondere das gesamte Behältergehäuse, in seiner Größe in der Weise variabel, dass sich die Größe der Öffnung mit wachsender Größe des Gehäuseelements vergrößert.

In einer vorteilhaften Ausführungsform der Erfindung weist das Gehäuseelement eine festgelegte Ruheform auf. Unter einer Ruheform wird im Folgenden eine Form verstanden, die sich in der Ruhe des Gehäuseelements einstellt. Die Ruheform ist dann festgelegt, wenn das Gehäuseelement auch nach einem Bewegen, beispielsweise einem Ziehen durchs Wasser, seine Ruheform wieder einnimmt, zweckmäßigerweise auch bei einem Ziehen durch Wasser behält. Hierdurch bleibt die eingestellte Öffnungsgröße erhalten und das Entweichen des Stoffs aus dem Behälter bleibt kontrollierbar. Eine festgelegte Ruheform kann besonders einfach durch Metall erreicht werden. Metall ist zwar elastisch verformbar und auch durch ein Verbiegen plastisch zu deformieren, es nimmt jedoch nach einer elastischen Verformung seine Ruheform wieder ein. Dies gilt auch nach einer plastischen Verformung, die eine neue Ruheform festlegt. Diese bleibt erhalten beziehungsweise wird nach einer elastischen Verformung identisch wieder eingenommen.

Vorteilhafterweise ist das Gehäuseelement eine Feder, zweckmäßigerweise eine Spiralfeder. Hierdurch kann die festgelegte Ruheform auch dann erhalten bleiben, wenn relativ große Kräfte am Gehäuseelement wirken, da dieses zu einer elastischen, federnden Bewegung ohne eine plastische Deformation vorbereitet ist. Auch bei starken Kräften, beispielsweise einem starken Ziehen durch eine Wasserströmung, bewegt sich das Gehäuseelement in seine festgelegte Ruheform zurück, sodass das Austreten des Stoffs aus dem Behältergehäuse kontrollierbar bleibt.

Insbesondere bei der Ausführung der Feder als Spiralfeder kann diese zwar durch eine plastische Verformung auseinander gezogen werden, ein plastisches Zusammendrücken, sodass die Spiralfeder plastisch verkleinert wird, ist jedoch erheblich schwerer, gegebenenfalls ohne entsprechende Werkzeuge manuell kaum zu bewerkstelligen. Um dennoch einen weiten Spielraum bei der Einstellung der Öffnungsgröße zu erhalten, ist es zweckmäßig, wenn eine als Spiralfeder ausgebildete Feder so ausgeführt ist, dass ihre Windungen in ihrer Ruheform spaltlos eng aneinander liegen. Hierdurch kann jede beliebige Öffnungsgröße - jedenfalls bis zu einer maximalen erreichbaren Größe - durch eine plastische Verformung durch ein Auseinanderziehen der Spiralfeder erreicht werden.

Zunächst ist das Behältergehäuse insbesondere seitlich durch die spaltlos aneinander liegenden Windungen zumindest bereichsweise verschlossen. Diese verschlossene Ruheform kann durch ein Auseinanderziehen in einfacher Weise in eine neue festgelegte Ruheform gebracht werden, in der die gewünschte Öffnungsgröße realisiert ist. Wird nur eine kleine Öffnung verlangt, so wird die Spiralfeder nur etwas plastisch auseinander gezogen. Bei einer gewünschten größeren Öffnung wird die Feder weiter auseinander gezogen und damit stärker plastisch verformt. Hierdurch ist die Feder in einfacher Weise manuell und werkzeuglos so plastisch verformbar, dass die Öffnung durch die Verformung vergrößert wird.

Eine weitere vorteilhafte Ausführungsform der Erfindung sieht vor, dass das Behältergehäuse ein Einstellmittel aufweist, mit der eine größere Öffnung einstellbar und/oder fixierbar ist. In dieser Ausführungsform kann beispielsweise auf eine plastische Verformung des Gehäuseelements verzichtet werden. Die Größe der Öffnung wird eingestellt und kann beispielsweise durch das Einstellmittel fixiert werden, ohne dass dazu eine plastische Verformung nötig wäre. Am Beispiel einer Feder erläutert kann die Feder rein elastisch verformt werden und anschließend durch das Einstellmittel in dieser Form gehalten werden. Auch hierdurch wird eine festgelegte Form erreicht, die jedoch durch elastische Spannung keine Ruheform ist.

Als ein Beispiel für ein einfaches Einstellmittel kann folgende Zusammenstellung genannt werden. Die Öffnung sei eine umlaufene Spaltöffnung zwischen Windungen einer Spiralfeder. Die Spiralfeder kann durch ein Auseinanderziehen oder Zusammendrücken in ihrer Länge verändert und damit die Größe der umlaufenden Öffnung verändert werden. Durch das Einstellmittel wird nun eine Weite der Öffnung fixiert. Dies kann erfolgen, indem das Einstellmittel zum Zusammendrücken, also Einstellen, und zum Fixieren der Feder im zusammengedrückten Zustand vorbereitet ist. Genauso gut ist es möglich, die Feder durch ein Ziehen elastisch zu verformen, wobei das Einstellmittel die auseinander gezogene Form fixiert und die Größe der Öffnung somit konstant hält. Durch das Einstellmittel kann eine einfache und universelle Wiederverwendbarkeit des Behälters erreicht werden. Das Gehäuseelement muss zur Einstellung der Behältergröße nicht plastisch verformt werden, sodass eine Änderung der Öffnungsgröße, beispielsweise für eine andere Verwendung beziehungsweise einen anderen Stoff, einfach durchgeführt werden kann. Beispielsweise ist das Einstellmittel so ausgeführt, dass es in mehreren Positionen, in denen die Öffnung unterschiedlich groß ist, fixierbar ist.

Eine weitere vorteilhafte Ausgestaltung der Erfindung sieht vor, dass das Gehäuse eine Formgedächtnislegierung aufweist. Zweckmäßigerweise ist das Gehäuseelement ein Element aus einer Formgedächtnislegierung. Eine solche metallische Legierung kann plastisch verformt werden und nimmt bei einem Erhitzen über eine vorbestimmte Temperatur, beispielsweise 80°C, seine ursprüngliche Form wieder ein. Die plastische Verformung wird somit rückgängig gemacht. Das Rückgängigmachen geschieht durch in der Legierung innewohnende Kräfte, sodass ein manueller oder maschineller Eingriff nicht notwendig ist. Bei einem solchen Behälter kann die Öffnungsgröße durch eine plastische Verformung des Gehäuseelements eingestellt werden. Soll die Öffnungsgröße für eine spätere und andere Verwendung verändert werden, so kann diese entweder durch eine erneute plastische Verformung oder durch ein Bringen in die ursprüngliche Form durch ein Erhitzen und dann gegebenenfalls eine weitere plastische Verformung geschehen. Eine vielfache Verwendung kann auf diese Weise einfach erreicht werden.

Weiter wird vorgeschlagen, dass das Behältergehäuse vorteilhafterweise zumindest zwei ineinander eindringbare Gehäuseelemente aufweist, von denen zumindest eines die Öffnung in der Weise bildet, dass das Einbringen die Größe der Öffnung verändert. Die beiden Gehäuseelemente sind hierbei zweckmäßigerweise so ausgeführt, dass sie bei einem Loslassen stabil in der jeweiligen Stellung zueinander verbleiben. Die Gehäuseelemente können beispielsweise ineinandergeschoben werden, wodurch die Öffnung vergrößert oder verkleinert wird. Durch ein zweckmäßiges zusätzliches Einstellelement können die Gehäuseelemente in ihrer Stellung zueinander fixiert werden.

Ein ineinander Einbringen kann in einer einfachen und formstabilen Weise erreicht werden, indem das Behältergehäuse zumindest zwei Gehäuseelemente in Form von Spiralfedern aufweist, die ineinander einschraubbar sind. Auch bei einem Auseinanderziehen der Behältergehäuse kann die Form stabil gewahrt werden, da die Bewegung zum Auseinanderziehen zweckmäßigerweise im Wesentlichen senkrecht zur Schraubbewegung steht, sodass ein Auseinanderziehen nicht oder nur schwer ein Auseinanderschrauben bewirkt. Die beiden Gehäuseelemente greifen in der Weise formschlüssig ineinander, dass der Formschluss ein Auseinanderziehen in eine Auseinanderziehrichtung blockiert.

Vorteilhafterweise weist zumindest eines der Gehäuseelemente einen umlaufenden Spalt zwischen den Federwindungen auf, der durch ein Ein- oder Aufschrauben des anderen Gehäuseelements verkleinert wird. Hierbei können beispielsweise beide Gehäuseelemente Federwindungen aufweisen, die ineinandergeschraubt werden. Die Federwindungen sind hierbei zweckmäßigerweise so ausgeführt, dass eine Federwindung des einen Gehäuseelements eine Öffnung zwischen zwei Federwindungen des anderen Gehäuseelements zumindest teilweise verschließt. Zweckmäßigerweise haben beide Spiralfedern die gleiche Gewindehöhe.

Vorteilhafterweise ist das Behältergehäuse mit einer konischen Drahtwicklung versehen, die eine Seite des Behältergehäuses zweckmäßigerweise verschließt. Die andere Seite kann beispielsweise mit einem Stopfen verschlossen werden. Durch die konische Drahtwicklung kann auf einen zweiten Stopfen oder ein ähnliches Verschlussmittel verzichtet werden.

Eine weitere Ausführungsform der Erfindung sieht vor, dass das Gehäuseelement ein Gewebe aufweist und die Öffnung Gewebeöffnungen sind. Die Öffnung besteht hierbei aus einer Vielzahl von kleinen Gewebeöffnungen, die durch das Gewebe gebildet werden. Das Gewebe ist hierbei zweckmäßigerweise aus einem Material gefertigt, dem eine festgelegte Ruheposition innewohnt.

Besonders geeignet ist ein Drahtgewebe oder ein Kunststoffgewebe. Der Begriff des Gewebes kann auch ein Geflecht umfassen, wobei das Gewebe gegenüber dem Geflecht den Vorteil einer definierteren und kontrollierbareren Bewegung für ein Einstellen der Öffnungsgröße aufweist. So kann das Gewebe beispielsweise ein Netzgewebe sein, das gestreckt oder gestaucht werden kann.

Vorteilhafterweise ist der Stoff ein fester Stoff, der das Gewebe zumindest teilweise umgibt, so kann das Gewebe mit dem Stoff getränkt sein, der nach dem Tränken erhärtet und somit fest am Gewebe hält. Zumindest der innerhalb des Behältergehäuses liegende Teil des Stoffs wird in seinem Austreten aus dem Behälter durch das Behältergehäuse gehemmt, wobei das Austreten durch die Öffnungsgröße eingestellt wird.

Weiter vorteilhaft ist das Behältergehäuse ein Strangknäuel. Unter einem Strang kann ein Draht oder eine Faser verstanden werden. Zweckmäßigerweise ist der Stoff hierbei ein fester Stoff, der das Strangknäuel zumindest teilweise umgibt oder von diesem umgeben wird. Vorteilhaft ist ein Drahtknäuel oder ein Kunststoffknäuel, insbesondere ein Nylonknäuel. Der Stoff kann in das Knäuel eingebacken sein.

Weiter ist es vorteilhaft, wenn das Behältergehäuse zumindest einen Deckel an einem Gehäuseende aufweist. Das Behältergehäuse kann in einfacher Weise verschlossen und wieder geöffnet werden, beispielsweise zum Einbringen des Stoffs, beispielsweise in fester Form. Der Deckel kann auch als Gehäuseelement dienen, das die Öffnung aufweist. Ebenfalls möglich ist es, dass der Deckel durch ein Verschließen die Gehäuseöffnung einstellbar verändert. So kann der Deckel beispielsweise unterschiedlich weit eingeschoben und die Öffnung hierdurch unterschiedlich weit verkleinert oder vergrößert werden.

Zweckmäßigerweise ist der Deckel ein Stülpdeckel, der das beispielsweise als Spiralfeder ausgeführte Gehäuseelement von außen umschließt. Ebenso gut kann der Deckel in die Spiralfeder eingesteckt sein. Besonders vorteilhaft ist ein Einschrauben in oder auf die Spiralfeder. Ebenfalls möglich ist ein Stopfen an einem Gehäuseende des Behältergehäuses. Der Stopfen verschließt das beispielsweise als Spiralfeder ausgeführte Gehäuseelement von innen.

Zum Anbringen des Behälters an beispielsweise an eine Angelschnur oder eine Ködervorrichtung weist das Behältergehäuse vorteilhafterweise einen Befestigungshaken auf. Anstelle des Hakens kann eine Öse oder eine andere geeignete Ausformung vorgesehen sein.

Die Erfindung ist außerdem gerichtet auf ein Verfahren zum Einstellen einer Größe einer Öffnung in einem Behälter, insbesondere einem Lockstoffbehälter, zum verzögerten Freisetzen eines Stoffs.

Es wird vorgeschlagen, dass der Behälter erfindungsgemäß ein Behältergehäuse mit einem Gehäuseelement aufweist, das verformt wird, wodurch die Öffnungsgröße verändert wird. Die Verformung kann plastisch oder elastisch geschehen. Wie bereits ausgeführt, dient das Verfahren zweckmäßigerweise zum Zwecke des Fischfangs.

Die Öffnungsgröße kann in einer Ruheposition stabil eingestellt bleiben oder durch ein Einstellmittel eingestellt und insbesondere fixiert werden. So kann das Einstellmittel die Öffnung bildende Gehäuseelemente in einer gespannten Form halten. Vor oder nach dem Einstellen der Öffnungsgröße kann der Behälter an einem Angelköder angebracht oder in der Nähe davon befestigt werden. Eine Nähe wird durch eine Entfernung von maximal 30 cm, maximal 10 cm, realisiert.

Weiter ist es vorteilhaft, wenn der Behälter mit dem im Behälterinnenraum angeordneten Stoff an einem Fischfangmittel befestigt und unter eine Wasseroberfläche gebracht wird. Der Stoff kann aus dem Behälterinnenraum austreten und sich so im Wasser verteilen. Der Behälter bleibt hierbei zweckmäßigerweise über eine Schnur mit einem Bediener, insbesondere einem Angler, verbunden. Bei einem Bringen des Behälters auf oder unter die Wasseroberfläche dringt in den Behälter Wasser ein und löst den Stoff langsam auf. Der Stoff verlässt den Behälter in aufgelöstem Zustand durch die Öffnung. Der Behälter kann beispielsweise durch das Wasser gezogen werden, insbesondere an der Schnur, sodass sich der Stoff im Wasser gut verteilt.

Die Öffnungsgröße kann besonders einfach und vorteilhaft eingestellt werden, wenn das Behältergehäuse auseinander gezogen wird und dadurch die Größe der Öffnung eingestellt wird. Zweckmäßigerweise behält das Gehäuseelement seine Form und Größe in fest eingestellter Weise, beispielsweise durch ein Einstellmittel oder durch eine festgelegte Ruheform. Das Gehäuseelement wird beispielsweise gestreckt und das Draht aufweisende Gehäuseelement wird plastisch verformt. Es behält seine Form auch bei einem Ziehen durch das Wasser, wobei eine elastische Verformung, die durch eine Rückstellbewegung in die Ruhestellung eliminiert wird, nicht als Änderung der Form und Größe angesehen wird.

Die bisher gegebene Beschreibung vorteilhafter Ausgestaltungen der Erfindung enthält zahlreiche Merkmale, die in den abhängigen Unteransprüchen teilweise zu mehreren zusammengefasst wiedergegeben sind. Diese Merkmale können jedoch zweckmäßigerweise auch einzeln betrachtet und zu weiteren sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar. Hierbei sind auch Verfahrensmerkmale mit den Vorrichtungsansprüchen und Vorrichtungsmerkmale mit den Verfahrensansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Lockstoffbehälter im Querschnitt mit einem aus einer Spiralfeder gebildeten Behältergehäuse,
- FIG 2: den Behälter aus FIG 1 im Querschnitt mit einer auseinander gezogenen Spiralfeder,
- FIG 3: einen Lockstoffbehälter, bei dem das Spiralfedergehäuse von einem Einstellmittel in einer definierten Position gehalten wird,
- FIG 4: einen Lockstoffbehälter aus zwei Gehäuseelementen, die ineinander schraubbar sind,
- FIG 5: die beiden Gehäuseelemente aus FIG 4 in einem ineinander geschraubten Zustand,
- FIG 6: einen weiteren Lockstoffbehälter, dessen beide Enden mit zwei Deckeln verschlossen sind,
- FIG 7: einen Lockstoffbehälter, dessen beide Enden mit zwei Stopfen verschlossen sind,
- FIG 8: einen Lockstoffbehälter Behältergehäuse, das an einer Seite konisch zusammen läuft,
- FIG 9: einen als Knäuel ausgeführten Lockstoffbehälter, dessen Größe durch ein Zusammendrücken verändert werden kann,
- FIG 10: einen Lockstoffbehälter mit einem Behältergehäuse aus einem Gewebe in einem auseinander gezogenen Zustand und
- FIG 11: den Lockstoffbehälter aus FIG 9 in einem zusammengeschobenen Zustand.

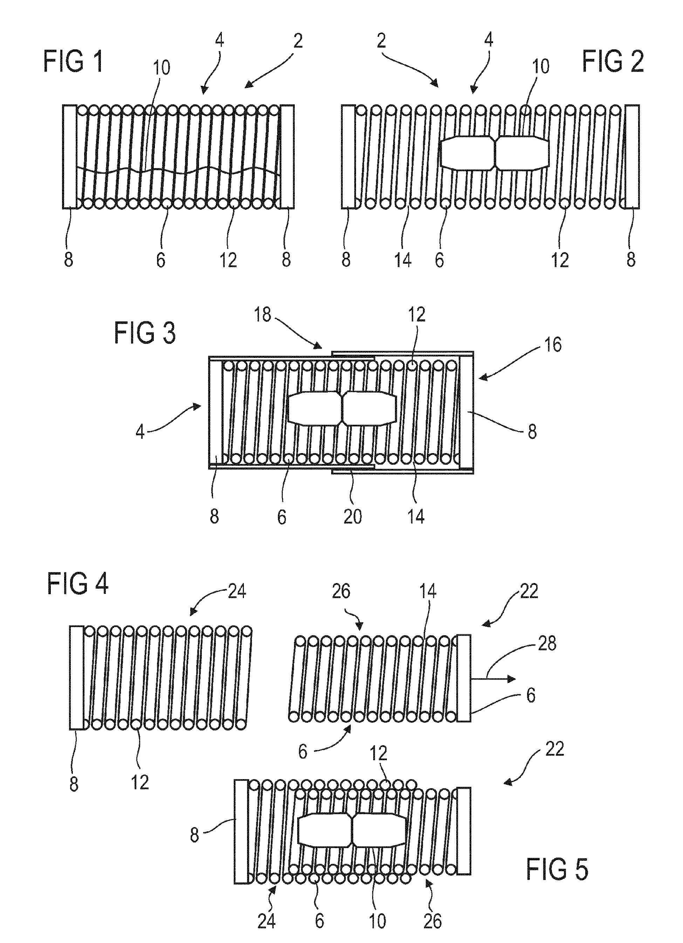

FIG 1 zeigt einen Behälter 2 mit einem Behältergehäuse 4, das ein als Spiralfeder ausgeführtes Gehäuseelement 6 aufweist. Die Spiralfeder ist an ihren Längsseiten beidseitig durch jeweils einen Deckel 8 verschlossen, der in irgendeiner Weise mit dem Gehäuseelement 6 verbunden ist. Einer der Deckel 8 ist zweckmäßigerweise lösbar, sodass eine Öffnung im Behältergehäuse 4 entsteht. Durch diese Öffnung kann ein Stoff 10 in das Behältergehäuse 4 eingebracht werden, beispielsweise Lockstoff oder Futter. Der Stoff 10 kann flüssig sein, wie in FIG 1 angedeutet ist, oder eine feste Form aufweisen, beispielsweise als Tablette ausgeführt sein, wie dies in FIG 2 angedeutet ist. Der Stoff 10 wird in das Behältergehäuse 4 eingeführt und der Deckel 8 wird verschlossen, sodass das Behältergehäuse 4 im Wesentlichen flüssigkeitsdicht ist.

Das Gehäuseelement 6, also in diesem Ausführungsbeispiel die Spiralfeder, ist aus Draht, der aus Metall ausgeführt und mit Kunststoff beschichtet sein kann. Der Draht kann kreisförmig oder in einer anderen Form gewickelt sein. Die Spiralfeder kann eingängig oder mehrgängig ausgeführt sein, also in Form von mehreren ineinander gewickelten Windungen.

Bei dem in FIG 1 gezeigten Zustand liegen die Windungen eng aneinander, sodass ein Spalt zwischen den Federwindungen allenfalls aus Fertigungsungenauigkeiten besteht. Ein solches Behältergehäuse 4 ist geeignet für flüssige Stoffe 10, die in die geschlossene Feder eingegeben werden können. Besonders vorteilhaft ist es, wenn die Feder in diesem Ruhezustand vorgespannt ist, und zwar zweckmäßigerweise in eine zusammenziehende Richtung. Durch diese Vorspannung werden die Windungen aufeinander gedrückt, sodass die Dichtigkeit des Behältergehäuses 4 begünstigt wird. Die Dichtigkeit kann weiter erhöht werden durch eine Kunststoffbeschichtung um den Draht einer jeden Windung. Der Kunststoff wird durch die Vorspannung zusammengepresst und hält den Behälter 2 ausreichend dicht. Beim Einfüllen und beim weiteren Handling läuft der flüssige Stoff 10 nicht aus dem Behältergehäuse 4 aus, sodass ein sauberer Umgang mit dem Lockstoffbehälter 2 ermöglicht wird.

Im verschlossenen Zustand wird der Behälter 2 am oder in der Nähe eines verwendeten Angelköders befestigt, zweckmäßigerweise näher als 30 cm, insbesondere näher als 10 cm, und ins Wasser gegeben. Unter Wasser kann der Behälter 2 beispielsweise hin und her geschwenkt werden oder er hängt ruhig unter der Wasseroberfläche und ist über eine Schnur mit dem Angler beziehungsweise der Angel des Anglers verbunden.

Da während des Angelns Stoff 10 aus dem Behältergehäuse 4 austreten soll, um Fische anzulocken, sollte ein Austreten des Stoffs 10 durch eine Öffnung im Gehäuseelement 6 gewährleistet werden. Eine solche Öffnung kann permanent oder nur temporär vorhanden sein. Eine permanente Öffnung zum Hindurchlassen von Flüssigkeit lässt sich durch beispielsweise eine Oberflächenstruktur der Windungen 12 des Gehäuseelements 6 erreichen. Eine gewisse Rauhigkeit oder eingeprägte Mikrokanäle können ein Austreten des Stoffs 10 in einem minimalen Umfang erlauben. Ein temporäres Öffnen kann beispielsweise durch ein Schwenken des Behälters 2 unter Wasser erreicht werden. So wird beispielsweise eine Zugkraft vom Angler auf einen der Deckel 8 aufgebracht, beispielsweise durch die Angel und über einen am Deckel befestigten und in FIG 1 nicht dargestellten Haken. Der Behälter wird im Wasser beschleunigt, sodass der andere Deckel 8 vom mit dem Haken versehenen Deckel 8 weggezogen wird. Die Vorspannung der Windungen 12 ist nun so zu wählen, dass diese kurzzeitig ein Stück weit auseinander gezogen werden, sodass flüssiger Lockstoff 10 austreten kann. Je mehr der Behälter 2 im Wasser geschwenkt wird, desto mehr Lockstoff 10 tritt aus. Eine Dosierung ist auch durch eine Schwenkgeschwindigkeit möglich, da mit wachsender Schwenkgeschwindigkeit die Windungen 12 auseinander gezogen werden und eine Öffnung zwischen den Windungen 12 freigegeben wird.

Eine permanente Öffnung kann auch durch ein manuelles Aufziehen der Windungen 12 erreicht werden, wie dies in FIG 2 dargestellt ist. Der Angler fasst das Behältergehäuse 4 an beiden Enden und zieht es so auseinander, dass das Gehäuseelement 6 beziehungsweise die Windungen 12 ein Stück weit plastisch deformiert werden. Die Spiralfeder wird auseinander gezogen und nimmt eine neue definierte Ruheform an. Zwischen den Windungen 12 entsteht eine Öffnung 14, bei dem Beispiel der Spiralfeder-Windungen 12 eine spiralförmige Öffnung 14. Durch diese kann Wasser frei hin und her strömen und Lockstoff 10 aus dem Behältergehäuse 4 austreten.

Bei dem in FIG 2 gezeigten Ausführungsbeispiel ist der Stoff 10 in fester Form in das Behältergehäuse 4 eingeführt und hat eine Tablettenform. Der Lockstoff löst sich langsam im Wasser auf, wobei das Austreten von Bröckchen und Bröseln aus dem Behältergehäuse 4 durch die Windungen 12 verhindert wird. Selbstverständlich können diese auch soweit auseinander gezogen werden, dass solche Bröckchen aus dem Behältergehäuse 4 austreten. Die Größe der Öffnung 14 ist relativ frei wählbar. Der Angler wird die Größe der Öffnung 14 durch ein definiertes Auseinanderziehen der Spiralfeder jedoch so einstellen, dass der Stoff 10 in einer wie von ihm gewünschten Weise aus dem Behältergehäuse 4 unter Wasser austritt.

Die Freisetzungsmenge des Stoffs 10 kann durch die Vergrößerung der Öffnungen 14 zwischen der Federwindung vergrößert werden. In FIG 2 ist der gleiche Federwickel wie in FIG 1 zu sehen, in FIG 2 wurde er nur vom Anwender gereckt, sodass sich durch die Stärke der Streckung ein frei wählbarer Spalt 14 zwischen den Windungen 12 und damit eine frei wählbare Öffnungsgröße - bis zu einer Maximalgröße - frei wählbar einstellen lässt. Auf diese Weise ist die Öffnungsgröße leicht einstellbar und an den Stoff 10 anpassbar, sodass eine gewünschte Freisetzrate erreicht wird. Ein maximaler Kraftaufwand für ein Auseinanderziehen des Gehäuseelements 6 ist 50 N, insbesondere maximal 10 N.

Der Nachteil, dass eine ausgedehnte Feder nicht ohne Weiteres wieder enger gemacht werden kann, kann überwunden werden, indem eine Formgedächtnislegierung für das Gehäuseelement 6 verwendet wird. Das aufgezogene Gehäuseelemente 6 wird über eine Grenztemperatur erwärmt, oberhalb derer sich die Formgedächtnislegierung wieder in ihre Urform zurückbewegt, zum Beispiel die Form der eng anliegenden Windungen 12 aus FIG 1.

Generell kann das eine oder mehrere Drähte enthaltende Gehäuseelement 6 in viele festgelegte Ruheformen gebracht werden, abhängig davon, wie weit die Windungen 12 auseinandergezogen werden. Nach einer plastischen Verformung nimmt das Gehäuseelement 6 eine neue festgelegte Ruheform ein, die der Anwender so gewählt hat. Eine elastische Deformation um die Ruheform ist weiterhin möglich, wobei das Gehäuseelement stets wieder in die gewünschte und gewählte Ruheform zurückfedert. Auf diese Weise bleibt die Öffnung 14 jedenfalls weitgehend in ihrer eingestellten Größe, sodass die Freisetzungsmenge des Stoffs 10 in der eingestellten Größe bleibt.

Ein anderer Behälter 16 ist in FIG 3 gezeigt. Die nachfolgende Beschreibung beschränkt sich im Wesentlichen auf die Unterschiede zum Ausführungsbeispiel aus FIG 1 und FIG 2, auf dass bezüglich gleich bleibende Merkmale und Funktionen verwiesen wird. Im Wesentlichen gleichbleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Das Gehäuseelement 6, das die radiale Außenwandung des Behältergehäuses 4 bildet, ist wieder als Spiralfeder ausgeführt. Diese kann in einem Urzustand mit aneinanderliegenden Windungen 12, wie in FIG 1 dargestellt oder mit einem Spalt zwischen den Windungen 12, wie in FIG 2 dargestellt, ausgeführt sein. Wesentlich ist, dass ein Einstellmittel 18 zum Einstellen der Öffnungsgröße vorhanden ist. Das Einstellmittel 18 umfasst mehrere miteinander verrastbare Kontaktflächen 20, die jeweils Rastzinken aufweisen, die ineinandergreifen und beim Zusammenschieben miteinander verrasten. Die Kontaktflächen 20 sind mit den Deckeln 8 fest verbunden, sodass die Deckel 8 durch ein Ineinanderschieben der Kontaktflächen 20 aufeinander zu bewegt werden. Die Kontaktflächen 20 können so lange ineinander verrastet werden, bis die gewünschte Stellung beziehungsweise Öffnungsgröße erreicht ist. Die Windungen 12 des Gehäuseelements 6 werden hierbei gegen ihre Federkraft zusammengedrückt, sodass das Einstellmittel 18 gegen einen Federdruck des Gehäuseelements 6 wirkt.

Selbstverständlich ist es auch möglich, dass das Einstellmittel 18 bei einem Ziehen nach außen verrastet und damit das Gehäuseelement 6 gegen eine Federkraft der Windungen 12 auseinanderzieht. So ist beispielweise die Urform des Gehäuseelements 6 mit aneinanderliegenden Windungen 12, wie in FIG 1 dargestellt. Durch ein Auseinanderziehen des Einstellmittels 18 wird die gewünschte Größe der Öffnung 14 gegen eine Federkraft des Gehäuseelements 6 eingestellt. Das Halten der Größe der Öffnung 14 kann durch ein Einrasten beziehungsweise Verrasten der Kontaktflächen 20 miteinander erreicht werden.

Unabhängig davon, in welche Richtung das Einstellmittel 18 das Gehäuseelement 6 bewegt, ob es das Gehäuseelement 6 auseinanderzieht oder zusammendrückt, das Einstellmittel 18 kann wieder geöffnet und damit das Gehäuseelement 6 in seine Ruheform gebracht werden. Beispielsweise wird die jeweils äußere Fläche 20 der Kontaktflächen 20 nach radial außen gezogen, sodass die Verrastung gelöst wird. Eine Fläche 20 kann von der anderen getrennt und das Einstellmittel 18 kann geöffnet werden.

FIG 4 zeigt einen Behälter 22, der zwei Gehäuseelemente 24, 26 aufweist, die ineinander einschraubbar sind. Beide Gehäuseelemente 24, 26 sind als Spiralfedern ausgeführt. Eines der Gehäuseelemente 26 weist hierbei einen kleineren Außendurchmesser auf, als das andere der Gehäuseelemente 24. Durch ein Eindrehen des engeren Gehäuseelements 26 in das weitere Gehäuseelement 24 kann ein Formschluss entgegen einer Auseinanderziehrichtung 28 erreicht werden, der ein selbständiges Lösen der beiden Gehäuseelemente 24, 26, beispielsweise durch einen Zug unter Wasser verhindert. Der Außendurchmesser des engeren Gehäuseelements 26 ist hierbei zweckmäßigerweise so gewählt, dass er etwas größer ist als der Innendurchmesser des weiteren Gehäuseelements 24.

FIG 5 zeigt den ineinander geschraubten Zustand der beiden Gehäuseelemente 24, 26. Der Stoff 10 wird in eines der Gehäuseelemente 24, 26 eingelegt und das andere Gehäuseelemente 26, 24 wird ein- oder aufgeschraubt, sodass einen feste Verbindung zwischen den beiden Gehäuseelementen 24, 26 beziehungsweise Federn entsteht. Ein Vorteil ist das einfache Beladen des so gebildeten Futterkorbes mit dem beispielsweise festen Stoff 10.

Zweckmäßigerweise ist die Ruheform der beiden Gehäuseelemente 24, 26 so gewählt, dass zwischen den Windungen 12 bereits eine Öffnung 14 durch einen Abstand der Windungen 12 zueinander besteht. Durch ein Einschrauben des Gehäuseelements 26 in das Gehäuseelement 24 wird die Öffnung 14 kontinuierlich verkleinert, da die inneren Windungen 12 des kleineren Gehäuseelements 26 die Öffnung 14 und damit die Spalte zwischen den Windungen 12 des äußeren Gehäuseelements 24 verschließt. Die Windungen 12 beider Gehäuseelemente 24, 26 sind hierbei eng aneinanderliegend, wie in FIG 5 dargestellt, sodass im Bereich der aneinanderliegenden Windungen der Spalt 14 verschlossen ist.

Eine andere Möglichkeit besteht darin, die Windungen 12 eng anliegend auszuführen. Der Angler schraubt die Gehäuseelemente 24, 26 ganz ineinander und zieht sie so weit auseinander, bis eine Spaltweite zwischen den Windungen 12 gewünschter Größe erreicht ist. Eventuell ist die Öffnung 14 durch die ineinandergedrehten Windungen immer noch vollständig verschlossen 12. Je nach Ausführung ist jedoch schon eine kleine Öffnung 14 vorhanden. Zusätzlich kann der Angler die beiden Gehäuseelemente 24, 26 noch etwas auseinanderschrauben zum weiteren Vergrößern der Öffnung 14.

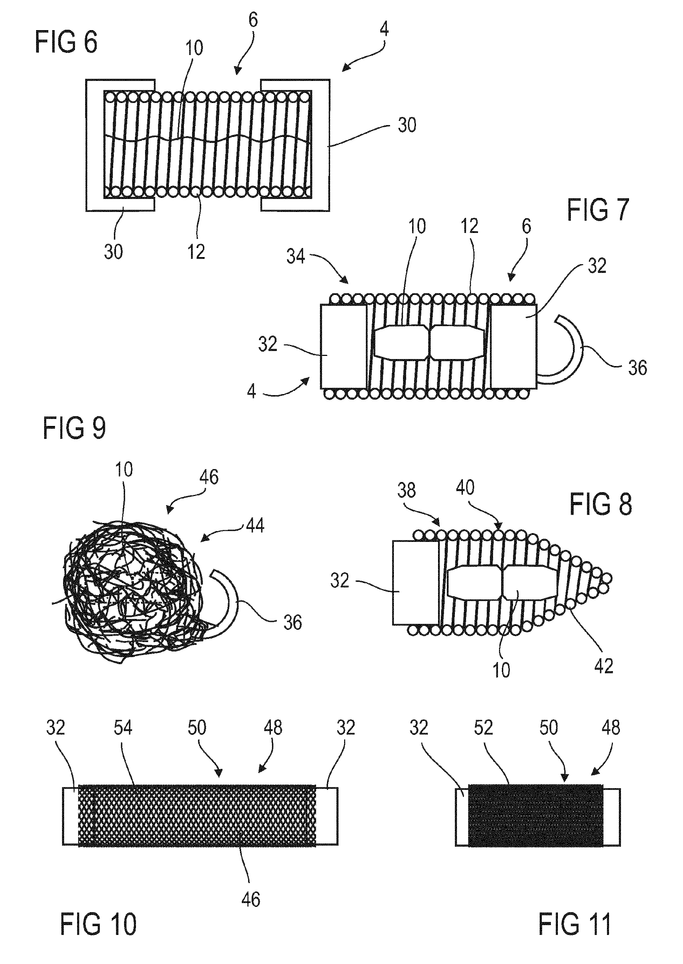

Eine andere Deckelform ist in FIG 6 gezeigt. Dieser Deckel 30 kann als Stülpdeckel ausgeführt sein, welcher dann außen um das Gehäuseelement 6 greift. Ebenso möglich ist eine Ausführung als Stopfen 32, wie in FIG 7 gezeigt ist, welcher das Gehäuseelement 4 ebenfalls auf einer Kopfseite verschließt, allerdings von innen. Bei grobstofflichen Lockmitteln, zum Beispiel Muschelfleisch, können diese Deckel 30 beziehungsweise Stopfen 32 auch entfallen, weil der Stoff 10 nur die Feder in Position gehalten wird.

Weiter kann ein Behälter 34 ein Befestigungsmittel 36 aufweisen, welches in FIG 7 in Form eines Hakens beispielhaft gezeigt ist. Ein solches Befestigungsmittel 36 ist - wie die übrigen Merkmale aller Ausführungsbeispiele auch - mit den anderen Ausführungsbeispielen kombinierbar. Mit diesem Befestigungsmittel 36 wird der Behälter 2, 16, 22, 34 an der gewünschten Stelle der Angelausrüstung befestigt, beispielsweise in unmittelbarer Nähe des Angelköders.

FIG 8 zeigt einen Behälter 38, dessen Behältergehäuse 40 an einer Kopfseite zusammenläuft. Gezeigt ist ein konisches Zusammenlaufen, wobei auch ein rundes, insbesondere halbkugelförmiges Zusammenlaufen denkbar ist, ebenso wie jede andere mögliche Form. Das Zusammenlaufen wird durch eine Engerwicklung der Spiralfeder des Behälterelements 42 geschaffen, sodass die Spiralfeder das Behältergehäuse 40 an einer Kopfseite verschließt. Es kann ein Deckel 30 oder Stopfen 32 gespart werden, was ein Handling erleichtert und Kosten spart.

Ein weiteres Ausführungsbeispiel eines anderen Behälters 44 ist in FIG 9 schematisch dargestellt. Der Behälter 44 hat ein als Knäuel ausgeführtes Gehäuseelement 46, das zugleich als vollständiges Behältergehäuse 4 dient. Das Befestigungsmittel 36 ist in das Knäuel eingewickelt und somit im Knäuel befestigt.

Das Knäuel besteht aus einem oder einer Vielzahl von Strängen, beispielsweise Draht, Kunststoff, aus mit Kunststoff beschichtetem Draht oder dergleichen. Wieder ist es vorteilhaft, wenn das Gehäuseelement 46 eine festgelegte Ruheform aufweist, beispielsweise eine entspannte Form des Strangs. Zum Einbringen des Stoffs 10, der in FIG 8 gestrichelt im Inneren des Knäuels angeordnet dargestellt ist, kann das Knäuel an einer Stelle etwas auseinandergezogen und der Stoff 10 eingebracht werden. Die Öffnung wird manuell durch ein Zusammenschieben des Strangs oder der Stränge wieder verschlossen.

Im ursprünglichen und in FIG 9 gezeigten Zustand hat das Knäuel eine Vielzahl von Öffnungen zwischen dem oder den Strängen, sodass der Lockstoff in großer Menge aus dem Gehäuseelement 46 austreten kann. Die Freisetzungsrate kann vom Angler nun so eingestellt werden, dass das Knäuel zusammengedrückt wird. Hierbei rücken die Stränge enger aneinander und die Öffnungen zwischen den Strängen oder dem einen gewickelten Strang werden kleiner. Im Prinzip kann das Knäuel soweit zusammengepresst werden, dass es ein kompaktes Bündel um den zweckmäßigerweise festen Stoff 10 bildet, aus dem der Stoff in einer nur sehr geringen Rate unter Wasser austreten kann. Je nachdem, wie weit der Angler das Knäuel zusammendrückt, verringert sich die Freisetzungsrate von einer maximalen Rate im Urzustand bis zu einer minimalen Rate als festes Bündel um den Lockstoff.

Anstelle des in das Knäuel eingebrachten Lockstoffs 10 kann der Stoff 10 auch mit dem Gehäuseelement 46, also dem Strang, verbacken sein. Hierzu wird das Gehäuseelement 46 zweckmäßigerweise im Stoff 10 getränkt, der anschließend aushärtet. Da der Stoff 10 nun sowohl außen als auch innen im Knäuel angeordnet ist, ist eine Freisetzungsrate des außen angeordneten Stoffes 10 schwer einstellbar. Allerdings wird die Freisetzungsrate des innen angeordneten Stoffs 10 durch die Öffnungsgröße der Durchlässe durch den Strang oder die Stränge beeinflusst.

Ein weiteres Ausführungsbeispiel eines Behälters 48 ist in den Figuren 10 und 11 gezeigt. Der Behälter 48 hat ein Behältergehäuse 50 aus einem Gehäuseelement 52 und zwei Stopfen 32. Das Gehäuseelement 50 ist ein Gewebe, das in Form eines Schlauchs ausgeführt ist. Dieses Gewebe kann aus Metall, wie z.B. bei Hydraulikschläuchen, oder aus Kunststoff, wie z.B. bei Kabelschutzschläuchen bestehen. Einer der Stopfen 32 kann abgenommen, der Stoff in den Schlauch eingeführt und der Schlauch durch das Einstecken des Stopfens 32 wieder verschlossen werden.

Zwischen den Gewebesträngen besteht jeweils ein Freiraum, sodass das Gewebe eine große Vielzahl kleiner Öffnungen bildet. Durch die Anordnung als diagonal gewickeltes Gewebe können diese Öffnungen 54 durch ein Ineinanderschieben oder Zusammendrücken des Gewebes verringert werden.

Das Gewebe in zusammengedrückter Form ist in FIG 11 dargestellt. Auch diese Form ist eine festgelegte Ruheform, da das Drahtgewebe einerseits sehr formstabil ausgeführt ist und andererseits so eng gewebt ist, dass es in sich einen Reibungswiderstand beim Auseinanderziehen oder Zusammendrücken erzeugt, der ein ungewünschtes Auseinanderziehen oder Zusammendrücken weitgehend verhindert. In diesem Ausführungsbeispiel kann zwischen kontinuierlich festlegbaren und statischen Ruheformen gewechselt werden, ohne dass eine plastische Deformation notwendig ist. Allein durch ein Verschieben des Gewebes in sich und damit eines Änderns des Gewebewinkels der beiden Geweberichtungen zueinander, kann die Ruheform variiert werden. Die Öffnungsgröße kann eingestellt und eine Freisetzungsrate wie gewünscht erreicht werden.

**Bezugszeichenliste**

| | |
|---|---|
| 2 | Behälter |
| 4 | Behältergehäuse |
| 6 | Gehäuseelement |
| 8 | Deckel |
| 10 | Stoff |
| 12 | Wicklung |
| 14 | Öffnung |
| 16 | Behälter |
| 18 | Einstellmittel |
| 20 | Kontaktfläche |
| 22 | Behälter |
| 24 | Gehäuseelement |
| 26 | Gehäuseelement |
| 28 | Ziehrichtung |
| 30 | Deckel |
| 32 | Stopfen |
| 34 | Behälter |
| 36 | Befestigungsmittel |
| 38 | Behälter |
| 40 | Behältergehäuse |
| 42 | Behälterelement |
| 44 | Behälter |
| 46 | Gehäuseelement |
| 48 | Behälter |
| 50 | Behältergehäuse |
| 52 | Gehäuseelement |
| 54 | Öffnung |

## Patentansprüche

1. Behälter (2, 16, 22, 34, 38, 44, 48), insbesondere Lockstoffbehälter, zum verzögerten Freisetzen eines Stoffes (10) mit einem Behältergehäuse (4, 40, 50), das ein Gehäuseelement (6, 24, 26, 40, 46, 52) aufweist, das mindestens eine einstellbare Öffnung (14) im Behältergehäuse (4, 40, 50) bildet.

2. Behälter (2, 16, 22, 34, 38, 44, 48) nach Anspruch 1,
**dadurch gekennzeichnet,**
**dass** das Gehäuseelement (6, 24, 26, 40, 46, 52) eine festgelegte Ruheform aufweist.

3. Behälter (2, 16, 22, 34, 38) nach Anspruch 1 oder 2,
**dadurch gekennzeichnet,**
**dass** das Gehäuseelement (6, 24, 26) eine Feder ist.

4. Behälter (2, 16, 22, 34, 38) nach Anspruch 3,
**dadurch gekennzeichnet,**
**dass** die Feder eine Spiralfeder ist und ihre Windungen (12) in ihrer Ruheform spaltlos eng aneinander liegen.

5. Behälter (2, 16) nach einem der vorhergehenden Ansprüche,
**dadurch gekennzeichnet,**
**dass** das Behältergehäuse (4, 40, 50) ein Einstellmittel (18) aufweist, mit der eine Größe der Öffnung (14) einstellbar und insbesondere fixierbar ist.

6. Behälter (2, 16, 22, 34, 38, 44, 48) nach einem der vorhergehenden Ansprüche,
**dadurch gekennzeichnet,**
**dass** das Gehäuseelement (6, 24, 26, 40, 46, 52) eine Formgedächtnislegierung aufweist.

7. Behälter (22) nach einem der vorhergehenden Ansprüche,
**dadurch gekennzeichnet,**
**dass** das Behältergehäuse (4) zumindest zwei ineinander einbringbare Gehäuseelemente (6) aufweist, von denen zumindest eines die Öffnung (14) in der Weise bildet, dass das Einbringen die Größe der Öffnung (14) verändert.

8. Behälter (22) nach einem der vorhergehenden Ansprüche,
**dadurch gekennzeichnet,**
**dass** das Behältergehäuse (4) zumindest zwei Gehäuseelemente (24, 26) in Form von Spiralfedern aufweist, die ineinander einschraubbar sind.

9. Behälter (38) nach einem der vorhergehenden Ansprüche,
**dadurch gekennzeichnet,**
**dass** das Behältergehäuse (40) eine konische Drahtwicklung aufweist, die eine Seite des Behältergehäuses (40) verschließt.

10. Behälter (38, 42 nach einem der vorhergehenden Ansprüche,
**dadurch gekennzeichnet,**
**dass** das Gehäuseelement (46, 52) ein Gewebe aufweist und die Öffnung (14) Gewebeöffnungen sind.

11. Behälter (38) nach einem der vorhergehenden Ansprüche,
**dadurch gekennzeichnet,**
**dass** das Gehäuseelement (46) ein Strangknäuel ist und der Stoff (10) ein fester Stoff ist, der das Strangknäuel zumindest teilweise umgibt.

12. Behälter (2, 16, 22, 34, 38, 48) nach einem der vorhergehenden Ansprüche,
**dadurch gekennzeichnet,**
**dass** das Behältergehäuse (4, 40, 50) zumindest einen Deckel (30) an einem Gehäuseende aufweist.

13. Verfahren zum Einstellen einer Größe einer Öffnung (14) in einem Behälter (2, 16, 22, 34, 38, 44, 48), insbesondere Lockstoffbehälter, zum verzögerten Freisetzen eines Stoffs (10), bei dem ein Gehäuseelement (6, 24, 26, 40, 46, 52) eines Behältergehäuses (4, 40, 50) des Behälters (2, 16, 22, 34, 38, 44, 48) verformt wird, wodurch die Öffnungsgröße verändert wird.

14. Verfahren nach Anspruch 13,
**dadurch gekennzeichnet,**
**dass** der Behälter (2, 16, 22, 34, 38, 44, 48) mit dem im Behälterinnenraum angeordneten Stoff (10) an einem Fischfangmittel befestigt und unter eine Wasseroberfläche gebracht wird.

15. Verfahren nach Anspruch 13 oder 14,
**dadurch gekennzeichnet,**
**dass** das Behältergehäuse (4, 40, 50) auseinander gezogen wird und dadurch die Größe der Öffnung (14) eingestellt wird und das Gehäuseelement (6, 24, 26, 40, 46, 52) seine Form und Größe fest eingestellt behält.
